# EUROPEAN PATENT SPECIFICATION

(11) **EP 2 799 492 B1**
(45) Date of publication and mention of the grant of the patent: **19.09.2018**
(21) Application number: 12863160.3
(22) Date of filing: 03.12.2012
(51) Int. Cl.: C08L 67/04, C08L 101/16, C08L 67/08, C08J 5/18

(54) **BIODEGRADABLE RESIN COMPOSITION AND METHOD USING SAME FOR MANUFACTURING A BIODEGRADABLE SHEET**
BIOLOGISCH ABBAUBARE HARZZUSAMMENSETZUNG UND VERFAHREN ZUR HERSTELLUNG EINER BIOLOGISCH ABBAUBAREN FOLIE
COMPOSITION DE RÉSINE BIODÉGRADABLE ET SON PROCÉDÉ D'UTILISATION DANS LA FABRICATION D'UNE FEUILLE BIODÉGRADABLE

(30) Priority: 26.12.2011 KR 20110142180
(43) Date of publication of application: 05.11.2014
(73) Proprietor: LG Hausys, Ltd., Seoul 150-721 (KR)
(72) Inventor: NAM, Seung-Baik, Cheongju-si Chungcheongbuk-do 361-864 (KR); SON, Jong-Seok, Cheongju-si Chungcheongbuk-do 361-727 (KR)
(74) Representative: Zacco Sweden AB
(86) International application number: PCT/KR2012/010389
(87) International publication number: WO 2013/100420

(56) References cited:
- EP-A1- 1 942 143
- EP-A2- 2 746 047
- JP-A- 2003 128 901
- KR-A- 20050 007 872
- KR-A- 20080 065 580
- KR-A- 20090 034 199
- KR-B1- 101 022 786
- KR-B1- 101 022 786
- US-A1- 2005 136 271
- US-A1- 2010 292 381

## Description

### [Technical Field]

The present invention relates to a biodegradable resin composition and a biodegradable sheet using the same. More particularly, the present invention provides a biodegradable resin composition comprising a PLA resin, a thermal initiator, and a crosslinking monomer, which is modified through a thermally initiated cross-linking reaction and a method of manufacturing a biodegradable sheet using the same

### [Background Art]

Petrolium resin such as polyvinyl chloride (PVC), etc. is used extensively in our lives. Especially, it is generally used for uses such as various construction interior materials or films, or sheets, household items, etc. The film or sheets are manufactured by extruding or calendaring methods using polyvinyl chloride (PVC), etc. But, because its raw materials are obtained from limited resources such as oil, etc., and problems of difficulty in supply and demand of raw materials in the future to occur from depletion of oil resources, etc. are expected. Also, taking recent increased interests in environmental problems into consideration, polyvinyl chloride (PVC) sheets easily emit toxic substances, and there are problems of imposing burden on the environment even when disposed.

With respect to this problem, recently, a synthesized PLA (Poly Lactic Acid) resin, which is extracted from plant resources, is being recognized as means to replace the described petroleum resin. Specifically, in KR Patent publication No. 10-2008-0067424, environmental sheets using this PLA resin is disclosed.

But, the PLA resin compositions compounded with PLA resin such as this, compared to resin compositions manufactured by prior PVC resins, stick to banbury mixers and compounding and kneading is difficult, and especially, when processing films through calendaring methods, it was difficult to process in calendaring methods as it sticks to calendering rolls, etc. due to lack of thermal viscoelasticity in high temperatures. Also, when processing in high temperatures, there are disadvantages of processing operation of laminating in multiple layers not being easily performed. Document EP 1 942 143 A1 discloses a polyester resin composition prepared from a material comprising 100 parts by mass of a resin compound containing 90 to 99,5% by mass of a biodegradable polyester resin, a (meth)acrylate compound as a crosslinking agent, 0,5 to 10% by mass of a plasticizer (like ATBC, see example 3), and 0,01 to 10 parts by mass of a peroxide.

### [Disclosure]

### [Technical Problem]

To solve the above described problems, an objective of the present invention is to, while improving environmental problems, develop a biodegradable resin composition with excellent physical properties after processing and a method of manufacturing a biodegradable sheet using the same.

### [Technical Solution]

To achieve the above objective, the present invention provides a biodegradable resin composition comprising a PLA resin, a thermal initiator, and a crosslinked monomer, which is modified through a thermally initiated cross-linking reaction, and a nonphtalate plasticizer, and a method of manufacturing a biodegradable sheet using the same.

To achieve another objective of the present invention, a method for manufacturing an eco-friendly biodegradable sheet by extruding the biodegradable resin composition or by processing the bidoderadable resin composition using a calendaring method is provided.

The invention is defined by the independent claims.

### [Advantageous Effects]

A biodegradable resin composition in accordance with the present invention, by being modified through a thermally initiated cross-linking reaction, a cross-linking between molecular chains is achieved and thus melt strength is increased and thus thermal processing is easily performed, and physical properties such as tensile strength, elongation etc. improves with respect to a product after processing.

Also, by using a biodegradable resin composition in accordance with the present invention, a sheet that may be used for fabrics and uses for various consumer goods is provided by securing improved flexibility.

### [Best Mode]

Advantages and features of the present invention, and method for achieving thereof will be apparent with reference to the detailed description that follows. But, it should be understood that the present invention is not limited to the following embodiments and may be embodied in different ways, and that the embodiments are given to provide complete disclosure of the invention and to provide thorough understanding of the invention to those skilled in the art, and the scope of the invention is limited only by the accompanying claims. Like components will be denoted by like reference numerals throughout the specification.

Hereinafter, the present invention will be described in detail.

A biodegradable resin composition in accordance with the present invention comprises a PLA resin, a thermal initiator, and a cross-linked monomer, which is modified through a thermally initiated cross-linking reaction.

The PLA resin, which is the main material of the biodegradable resin composition in accordance with the present invention, is thermoplastic polyester of lactide or lactic acid, and for a manufacturing example, it may be manufactured by a polymerization of lactic acid produced by fermenting starch extracted from corns, potatos, etc. Since the corns, potatos, etc. are plant resources that may be regenerated any number of times, the PLA resin, which is obtained from these, may effectively deal with the problem of oil resource depletion.

Also, the PLA resin has lower emission of environmental toxic substances such as CO₂, etc. during usage and disposal processes compared to oil based materials such as polyvinyl chloride (PVC), and is economically friendly in that it decomposes easily in natural environments even when disposed.

The PLA acid resin may be divided in to a c-PLA resin, which is crystalline PLA, and an a-PLA resin, which is non-crystalline PLA. In this instance, since bleeding situations, in which plasticizers flow out to the surface of a foam sheet, may occur in the case of the crystalline PLA resin, using the non-crystalline PLA resin is preferable. In the case of the non-crystalline PLA resin, it is advantageous in that it does not require adding compatibilizing agents, which is essentially added to prevent bleeding situations. In the case where the non-crystalline PLA resin is used, it is most preferable to use 100% non-crystalline PLA resin for the PLA resin, and the PLA resin with crystalline and non-crystalline co-existing may be used when necessary.

The biodegradable resin composition in accordance with the present invention comprises a thermal initiator so that a cross-linking reaction from heat may take place.

It is preferable for the thermal initiator to be a radical initiator by forming radicals decomposed by heat generated from processing processes such as threading, mixing, laminating process, etc.

It is preferable for the thermal initiators that may be used in the present invention to be an azo compound or a peroxide compoound, and mixtures thereof.

More specifically, for examples of azo compoounds, 2,2'-azobis(2-methylbutyronitrile), 2,2'-azobis(isobutyronitrile), 2,2'-azobis(2,4-dimethylvaleronitrile), 2,2'-azobis(4-methoxy-2,4-dimethylvaleronitrile), etc. may be used, and for examples of peroxide compounds, tetramethylbutyrperoxy neodecanoate (ex.Perocta ND. manufactured by NOF), bis(4-butyrcyclohexyl)peroxydicarbonate (ex.Peroyl TCP, manufactured by NOF), di(2-ethylhexyl)peroxydicarbonate, butyrperoxy neodecanoate (ex. Perbutyl ND, manufactured by NOF), dipropyl peroxydicarbonate (ex. Peroyl NPP, manufactured by NOF), diisopropyl peroxydicarbonate (ex. Peroyl IPP, manufactured by NOF), diethoxyethyl peroxydicarbonate (ex. Peroyl EEP, manufactured by NOF), diethoxyhexyl peroxydicarbonate (ex.Peroyl OEP, manufactured by NOF), hexylperoxydicarbonate (ex. Perhexyl ND, manufactured by NOF), dimethoxy butyrperoxydicarbonate (ex. Peroyl MBP, manufactured by NOF), bis(3-methoxy-3-methoxybutyr) peroxydicarbonate (ex.Peroyl SOP, manufactured by NOF), dibutyl peroxydicarbonate, dicetyl peroxydicarbonate, dimyristyl peroxydicarbonate, 1,1,3,3-tetramethylbutyrperoxypivalate, hexylperoxypivalate (ex. Perhexyl PV, manufactured by NOF), butyrperoxypivalate (ex. Perbutyl, manufactured by NOF), trimethyl hexanoyl peroxide (ex. Peroyl 355. manufactured by NOF), dimethyl hydroxyl butyrperoxy neodecanoate (ex. Luperox 610M75, manufactured by Atofina), amyl peroxy neodecanoate (ex. Luperox 546M75, manufactured by Atofina), butyrperoxy neodecanoate (ex. Luperox 10M75, manufactured by Atofina), t- butyrperoxy neoheptanoate, amyl peroxy pivalate, t- butyrperoxy pivalate, t-amyl peroxy-2-ethylhexanoate, lauryl peroxide, dilauroyl peroxide, didecanoyl peroxide, benzoyl peroxide, dibenzoyl peroxide, etc. may be used, but is not limited to this.

It is preferable for an amount of the thermal initiator to be 0.1 to 10 parts by weight, based on 100 parts by weight of the PLA resin. When the amount is less than 0.1 parts by weight, it is difficult for sufficient radical initiating reaction to occur, and when the amount is more than 10 parts by weight, physical properties may degrade by deterioration of the PLA resin occurring from non-reacted initiators.

Biodegradable resin compositions in accordance with the present invention comprises a monomer taking the role of a cross-link formed between molecular chains of the PLA resin from a cross-linking reaction.

It is preferable for the monomer to have excellent characteristics of required physical properties such as melt strength, transparency, UV resistance, waterproofing, solvent resistance, etc., and to easily polymerize from heat.

Specifically, selecting from the group consisting of acrylate monomer and metacrylate monomer, and mixtures thereof with a single function or multifunctions is preferable.

It is preferable for the monomer to be present in an amount of 0.1 to 10 parts by weight, based on 100 parts by weight of the PLA resin. When the amount is less than 0.1 parts by weight, there are problems of effects of physical property improvements in melt strength, etc are insufficient, and when more than 10 parts by weight, there are problems of losing flexibility or viscoelasticity for film processing because excessive cross-linking is carried out.

It should be manufactured in a biodegradable film or a sheet form comprising the biodegradable resin compositions in accordance with the present invention, and calendaring or extrusion methods are used to process in the form of a sheet or a film.

The plasticizer is an eco-friendly plasticizer, and is a non-phthalate. This non-phthalate plasticizer comprises benzoic acid derivatives, and optionally at least one selected from the group consisting of citric acid derivatives, furmaric acid derivatives, glycerol derivatives, isophthalic acid derivatives, lauric acid derivatives, linoleic derivatives, maleic acid derivatives, phosphoric acid derivatives, sebacic acid derivatives, stearic acid derivatives, succinic acid derivatives, and sulfonic acid derivatives.

It is preferable for the non-phthalate plasticizer to be present in an amount of 5 to 100 parts by weight, based on 100 parts by weight of the PLA resin. When the amount is less than 5 parts by weight, workability may be reduced as hardness of the PLA resin increase, and when more than 100 parts by weight, plasticity and flexibility may increase, but bleeding, in which plasticizers leak at the surface, occurs due to excessive use of the plasticizers.

Also, the biodegradable resin composition in accordance with the present invention may further comprise lubricants, calcium carbonate (CaCO3) as reinforcing inorganic fillers, titanium dioxide (TiO2) as a white pigment for the purpose of granting aesthetic, etc.

The lubricant is added to prevent the resin compositions from sticking to a calendering roll during a calendaring process of the biodegradable resin composition. There are many differentkinds of these lubricants, but an eco-friendly higher fatty acid is used in the present invention, and a stearic acid, which is a saturated higher fatty acid with a carbon number of 18, etc. may be used as an example.

It is preferable for the lubricant to be present in an amount of 0.1 to 10 parts by weight, based on 100 parts by weight of the PLA resin. When the amount is less than 0.1 parts by weight, effects of using lubricants may not be obtained, and when the amount of usage of the lubricants is more than 10 parts by weight, impact resistance, heat resistance, glossiness, transparency, etc. of the PLA resin may be degraded.

In the case of the calcium carbonate, using 5 to 1,000 parts by weight, based on 100 parts by weight of the PLA resin is preferable. Also, in the case of the titanium dioxide, using 0.5 to 50 parts by weight, based on 100 parts by weight of the PLA resin is preferable. When the calcium carbonate and the titanium dioxide are used more than the range, workability may decline due to reduction in bond strength of other substances.

A method for manufacturing films and sheets using the biodegradable resin composition in accordance with the present invention is not specifically limited, for example, may be manufactured through extrusion or calendaring methods using the biodegradable resin composition comprising each described component. Especially, among these, it is preferable to manufacture desired films or sheets through the calendaring method after mixing and kneading each components of the biodegradable resin composition comprising the described PLA resin in that sheets with excellent physical properties such as durability, weather resistance and surface strength, etc. is obtainable.

Here, by utilizing a processing heat in the kneading process of each component, the thermal initiators comprised in the biodegradable resin composition of the present invention decompose to radicals and the cross-linking reaction between the PLA resin and the monomer is initiated.

The mixing and kneading process for the components describe above, for example, may be performed by using components in liquid or powder form in a super mixer, an extruder, a kneader, a double roll, a triple roll, etc.

Also, in the component mixing and kneading process, for a more efficient mixing, the mixing and kneading process may be performed in multiple steps and repeatedly such as methods of kneading mixed ingredients using a banbury mixer, etc. at temperatures of about 120 ∼ 200 °C, and a first and a second mixing the kneaded components using a double roll, etc. at temperatures of about 120 ∼ 200 °C. Meanwhile, a method for manufacturing inner layers, etc on films or sheets by applying kneaded components to a calendaring method as above is also not limited, and for example, a common calendaring equipment such as an inverted L type quadruple roll calendar, etc. may be used and manufactured

Also, calendaring process conditions in above, may be appropriately selected taking composition, etc. of a resin composition used into consideration and a calendaring process may be performed in a processing temperature of about 120 ∼ 200 °C.

### Manufacturing sheets from an Example and a Comparative example

Hereinafter, a manufacturing example from a manufacturing example and a comparative example through calendaring process of a PLA sheet is provided. In the Example below, the composition comprises a plasticizer different from the scope of the appended claims.

Contents not written here may be fully inferred by those skilled in the art, and thus the description is skipped.

### Example

100 parts by weight of a PLA resin (USA, Nature works, 2003D), 20 parts by weight of ATBC (Acetyl Tributyl Citrate, Aekyung chemical) as a plasticizer, 1 parts by weight of a methacrylate monomer as a cross-linking agent, 1 parts by weight of dialkyl peroxide as a thermal initiator, and 3 parts by weight of stearic acid as a lubricant for preventing sticking to a banbury mixer and a calendar roll, etc. are kneaded in a banbury mixer until a temperature becomes 160°C so that a cross-linking from a thermal initiation occur.

And then, after sufficient mixing was done by using a 120°C warming roll before being fed into a calendar roll for a smooth film sheeting operation on the calendar roll, a thermally initiated cross-linked kneaded material, which passed through a strainer to remove miscellaneous materials, for additional kneading, etc., was passed through a common quadruple roll calendar with a processing temperature of 140∼150°C and a transparent film with a thickness of 0.20mm was manufactured.

### Comparative example

Dialkyl peroxide, which is a thermal initiator, and a methacrylate monomer, which is a cross linking agent, in the PLA resin of the Example is excluded, and instead of a calendar process, a T-die film process using a extruder, which is a method of manufacturing PLA transparent films, is used to manufacture a transparent film with 0.2mm thickness.

Here, a kneaner was used to knead ATBC, which is a plasticizer, and the temperature of an extruder was 180°C.

### Evaluation

A measurement of mechanical strengths (tensile strength, tear resistance) was performed in conditions of temperatures of 20 ±2°C, and a relative humidity of 65 ±2% and at a tension velocity of 500mm/minute using a tension tester (ASTM D 882). Also, an elongation when a film breaks was measured in same conditions as the tensile strength.

Evaluation results of calendar workability and physical properties of the Example and Comparative example is as illustrated in [Table 1].

**[Table 1]**

| Classfication | Example | Comparative example |
|---|---|---|
| Banbury mixer/Calender roll workability | - 160°C banbury kneading perfomed-140°C∼150°C calendar roll workable | - Manufactured by T-die extrusion method Film processing is not possible due to sticking to surface of banbury mixer and calendar roll |
| Tear resistance (Kgf/cm²) | 0.97 | 0.62 |
| Elongation (%) | 4.37 | 0.85 |
| Tensile strength (Kgf/cm²) | 308.2 | 125.3 |

As in the evaluation result, it is observed that the biodegradable resin composition as in the Example, by using the biodegradable resin composition reformed through the cross-linking reaction, was workable in a high temperature kneading and calendaring process, and a film strength after processing was also excellent. On the contrary, in the Comparative example, which comprised the PLA resin composition without the cross-linking characteristics as in the Example, does not form heat resisting viscoelasticity, and the banbury mixer and the calendar roll processing in temperatures of 140°C or higher for the calendar processing was impossible.

When comparing the heat resistant viscoelasticity of the biodegradable resin composition of the Example and the Comparative example, a damping factor (tanδ) of the Comparative example sharply increases as temperature increases. As such, it may be observed that in contrast to a characteristic, in which heat resistant viscoelasticity collapses, of the Comparative example, in the case of the Example, relatively stable viscoelasticity was maintained.

Although detailed embodiments in accordance with the present invention have been described herein, these embodiments are given by way of illustration only, and it should be understood that various modifications, variations and alterations can be made by those skilled in the arts. Therefore, the scope of the present invention should be defined by the appended claims.

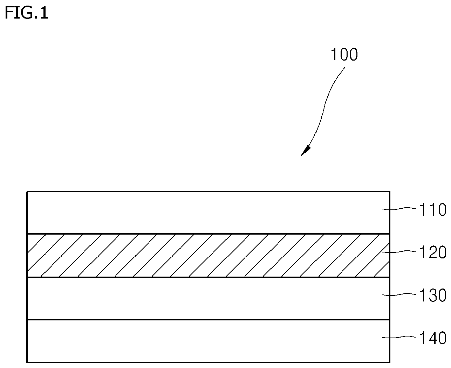

## Claims

1. A biodegradable resin composition comprising a PLA resin, a thermal initiator, and a cross linking monomer, which is modified through a thermally initiated crosslinking reaction,
wherein the biodegradable resin composition further comprises a nonphthalate plasticizer,
the nonphthalate plasticizer comprises benzoic acid derivatives, and
the cross linking monomer is methacrylate monomer.

2. A biodegradable resin composition according to claim 1, wherein the thermal initiator is selected from the group consisting of an azo compound, an peroxide compound, and mixtures thereof.

3. A biodegradable resin composition according to claim 1, wherein the thermal initiator is present in an amount of 0.1 to 10 parts by weight, based on 100 parts by weight of the PLA resin.

4. A biodegradable resin composition according to claim 1, wherein the cross linking monomer is present in an amount of 0.1 to 10 parts by weight, based on 100 parts by weight of the PLA resin.

5. A biodegradable resin composition according to claim 1, wherein the non phthalate plasticizer is present in an amount of 5 to 100 parts by weight, based on 100 parts by weight of the PLA resin.

6. A biodegradable resin composition according to claim 1, wherein the biodegradable resin composition further comprises 0.1 to 10 parts by weight of a lubricant, 5 to 1,000 parts by weight of calcium carbonate, 0.5 to 50 parts by weight of titanium dioxide, based on 100 parts by weight of the PLA resin.

7. A method for manufacturing an eco-friendly biodegradable sheet manufactured by extruding the biodegradable resin composition according to any one of claim 1 to claim 6.

8. A method for manufacturing an eco-friendly biodegradable resin sheet manufactured by processing the biodegradable resin composition according to any one of claim 1 to claim 6 using a calendering method.

## Patentansprüche

1. Biologisch abbaubare Harzzusammensetzung umfassend ein PLA-Harz, einen thermischen Initiator und ein Vernetzungsmonomer, das durch eine thermisch initiierte Vernetzungsreaktion modifiziert wird,
wobei die biologisch abbaubare Harzzusammensetzung ferner einen phthalatfreien Weichmacher umfasst,
der phthalatfreie Weichmacher Benzoesäurederivate umfasst, und
das Vernetzungsmonomer Methacrylatmonomer ist.

2. Biologisch abbaubare Harzzusammensetzung nach Anspruch 1, wobei der thermische Initiator aus der aus einer Azoverbindung, einer Peroxidverbindung und Mischungen davon bestehenden Gruppe ausgewählt ist.

3. Biologisch abbaubare Harzzusammensetzung nach Anspruch 1, wobei der thermische Initiator in einer Menge von 0,1 bis 10 Gewichtsteilen, bezogen auf 100 Gewichtsteile des PLA-Harzes, vorliegt.

4. Biologisch abbaubare Harzzusammensetzung nach Anspruch 1, wobei das Vernetzungsmonomer in einer Menge von 0,1 bis 10 Gewichtsteilen, bezogen auf 100 Gewichtsteile des PLA-Harzes, vorliegt.

5. Biologisch abbaubare Harzzusammensetzung nach Anspruch 1, wobei der phthalatfreie Weichmacher in einer Menge von 5 bis 100 Gewichtsteilen, bezogen auf 100 Gewichtsteile des PLA-Harzes, vorliegt.

6. Biologisch abbaubare Harzzusammensetzung nach Anspruch 1, wobei die biologisch abbaubare Harzzusammensetzung ferner 0,1 bis 10 Gewichtsteile eines Schmiermittels, 5 bis 1000 Gewichtsteile von Kalziumkarbonat, 0,5 bis 50 Gewichtsteile von Titandioxid, bezogen auf 100 Gewichtsteile des PLA-Harzes, umfasst.

7. Verfahren zur Herstellung einer umweltfreundlichen biologisch abbaubaren Folie, die durch das Extrudieren der biologisch abbaubaren Harzzusammensetzung nach einem der Ansprüche 1 bis 6 hergestellt wird.

8. Verfahren zur Herstellung einer umweltfreundlichen biologisch abbaubaren Harzfolie, die durch das Verarbeiten der biologisch abbaubaren Harzzusammensetzung nach einem der Ansprüche 1 bis 6 unter Verwendung eines Kalandrierverfahrens hergestellt wird.

## Revendications

1. Composition de résine biodégradable comprenant une résine de PLA, un initiateur thermique et un monomère réticulant, qui est modifié par une réaction de réticulation amorcée thermiquement,
dans laquelle la composition de résine biodégradable comprend en outre un plastifiant non phtalate,
le plastifiant non phtalate comprend des dérivés d'acides benzoïque, et
le monomère réticulant est un monomère méthacrylate.

2. Composition de résine biodégradable selon la revendication 1, dans laquelle l'initiateur thermique est choisi dans le groupe constitué par un composé azo, un composé peroxyde et des mélanges de ceux-ci.

3. Composition de résine biodégradable selon la revendication 1, dans laquelle l'initiateur thermique est présent en une quantité de 0,1 à 10 parties en poids, sur la base de 100 parties en poids de la résine de PLA.

4. Composition de résine biodégradable selon la revendication 1, dans laquelle le monomère réticulant est présent en une quantité de 0,1 à 10 parties en poids, sur la base de 100 parties en poids de la résine de PLA.

5. Composition de résine biodégradable selon la revendication 1, dans laquelle le plastifiant non phtalate est présent en une quantité de 5 à 100 parties en poids, sur la base de 100 parties en poids de la résine de PLA.

6. Composition de résine biodégradable selon la revendication 1, dans laquelle la composition de résine biodégradable comprend en outre 0,1 à 10 parties en poids d'un lubrifiant, 5 à 1000 parties en poids de carbonate de calcium, 0,5 à 50 parties en poids de dioxyde de titane, sur la base de 100 parties en poids de la résine PLA.

7. Procédé de fabrication d'une feuille biodégradable écologique fabriquée par extrusion de la composition de résine biodégradable selon l'une quelconque des revendications 1 à 6.

8. Procédé de fabrication d'une feuille de résine biodégradable écologique fabriquée en traitant la composition de résine biodégradable selon l'une quelconque des revendications 1 à 6 en utilisant un procédé de calandrage.
